# EUROPÄISCHE PATENTSCHRIFT

(11) **EP 4 178 904 B1**
(45) Veröffentlichungstag und Bekanntmachung des Hinweises auf die Patenterteilung: **25.11.2026**
(21) Anmeldenummer: 21739968.2
(22) Anmeldetag: 28.06.2021
(51) Int. Cl.: B66F 9/19, B65G 67/20, B65D 19/08, B65D 88/60, B65D 85/06

(54) **VERFAHREN ZUR BELADUNG EINES CONTAINERS MIT FAHRZEUGREIFEN**
METHOD FOR LOADING A CONTAINER WITH VEHICLE TYRES
PROCÉDÉ DE CHARGEMENT D'UN RÉCIPIENT AVEC DES PNEUS DE VÉHICULE

(30) Priorität: 09.07.2020 DE 102020208617
(43) Veröffentlichungstag der Anmeldung: 17.05.2023
(73) Patentinhaber: Continental Reifen Deutschland GmbH, 30175 Hannover (DE)
(72) Erfinder: KORNAU, Rene, 30165 Hannover (DE); DUMKE, Michael, 30165 Hannover (DE); BAARS, Nico, 30165 Hannover (DE); GUZMA, Rastislav, 30165 Hannover (DE)
(74) Vertreter: Continental Corporation
(86) Internationale Anmeldenummer: PCT/DE2021/200086
(87) Internationale Veröffentlichungsnummer: WO 2022/008010

(56) Entgegenhaltungen:
- NL-C2- 1 008 028
- US-A- 4 579 501
- US-A- 5 201 427
- US-A- 5 340 268

## Beschreibung

Die Erfindung betrifft ein Verfahren zur Beladung eines Containers mit Fahrzeugreifen.

Nach Herstellung von Fahrzeugreifen in Reifenwerken werden diese im Allgemeinen zum Weitertransport in Container beladen.

Bei den Containern handelt es sich üblicherweise um Nutzfahrzeuganhänger, die manuell mit einzelnen Fahrzeugreifen beladen werden.

Die Zeit zum Beladen eines Containers dauert im Allgemeinen relativ lange. Außerdem ist die Beladung des Containers mit einem hohen Personalaufwand verbunden.

Die US 5340268 A betrifft eine Warenhandhabungsvorrichtung zur Befestigung an Gabelstaplern oder dergleichen gemäß dem Oberbegriff des Anspruchs 1. Die Warenhandhabungsvorrichtung umfasst unter anderem eine Ladeplattform, einen an der Ladeplattform befestigten Rahmen, ein horizontales Element, das im Rahmen beweglich angeordnet ist, und einen horizontal beweglichen Kolben, der sich innerhalb des Rahmens von vorne nach hinten bewegt, um unter Druck stehende Waren auszugeben. Weiterer Stand der Technik ist in der NL 1008028 C2, der US 4579501 A und der US 5201427 A offenbart.

Der Erfindung liegt die Aufgabe zugrunde, ein Verfahren bereitzustellen, mit dem Container effizient und schnell mit einer Vielzahl von Fahrzeugreifen beladen werden können.

Gelöst wird die Aufgabe durch ein Verfahren mit den folgenden Schritten:
a) Bereitstellen eines Ladungsträgers mit einer Vielzahl von gestapelten Fahrzeugreifen an einer Pufferposition,
b) Abholen des Ladungsträgers mit einem Transportmittel von der Pufferposition,
c) Einbringen des Ladungsträgers mit dem Transportmittel in den Container,
d) Anordnen und Absetzen des Ladungsträgers mit dem Transportmittel an einer Abladeposition im Container,
e) Absetzen der Fahrzeugreifen an der Abladeposition im Container,
   wobei der Ladungsträger mit dem Transportmittel im Container zurück verfahren wird und mit einer verfahrbaren Gegenplatte die Fahrzeugreifen von einer Bodenfläche des Ladungsträgers in die Abladeposition im Container geschoben werden,
f) Herausfahren des Ladungsträgers aus dem Container,
dadurch gekennzeichnet, dass beim Absetzen der Fahrzeugreifen von dem Landungsträger die Gegenplatte mit einem ausfahrbaren Haltemittel am Transportmittel in seiner Position gehalten wird, wobei gleichzeitig das Transportmittel mit der Bodenplatte und den Seitenwänden zurück bewegt wird.

Ein Vorteil des Verfahrens besteht darin, dass mit dem neuen Verfahren ein Container schnell und effizient mit einer Vielzahl von Fahrzeugreifen beladen werden kann.

Die Beladung des Containers mit dem Ladungsträger erfolgt um vielfaches schneller als bei einer manuellen Beladung.

Außerdem kann der Personalaufwand für das Beladen des Containers auf ein Minimum reduziert werden. Das Beladen mit dem Ladungsträger hat außerdem den Vorteil, dass die Fahrzeugreifen mit einer sehr hohen Packungsdichte im Container verstaut werden können.

Die einzelnen Fahrzeugreifen werden optimal im Ladungsträger angeordnet und anschließend mit dieser geringen Packungsdichte im Container abgesetzt.

Erfindungsgemäß ist vorgesehen, dass beim Absetzen der Fahrzeugreifen von dem Landungsträger die Gegenplatte mit einem ausfahrbaren Haltemittel am Transportmittel in seiner Position gehalten wird,
wobei gleichzeitig das Transportmittel mit der Bodenplatte und den Seitenwänden zurück bewegt wird.

Dadurch können die im Ladungsträger angeordneten Fahrzeugreifen effizient auf der Beladungsposition im Container abgeladen werden. Das Transportmittel kann dadurch außerdem die erforderliche Kraft auf die Gegenplatte aufbringen.

In einer weiteren vorteilhaften Weiterbildung der Erfindung ist vorgesehen, dass die Gegenplatte mit einer seitlichen Führung an den Seitenwänden des Ladungsträgers angeordnet ist.

Dadurch wird gewährleistet, dass sich die Gegenplatte nicht an den Seitenwänden des Ladungsträgers verkanten kann.

In einer weiteren vorteilhaften Weiterbildung der Erfindung ist vorgesehen, dass die Bodenfläche auf der Innenseite und/oder die Innenseiten der Seitenwände des Ladungsträgers Gleitelemente aufweisen, wobei mit den Gleitelementen das Absetzen der Fahrzeugreifen vom Ladungsträger unterstützt wird.

Dadurch kann das Paket aus gestapelten Fahrzeugreifen ohne störende Reibungseffekte vom Ladungsträger geschoben werden.

In einer weiteren vorteilhaften Weiterbildung der Erfindung ist vorgesehen, dass die Außenseiten der Seitenwände des Ladungsträgers Gleitelemente zum vereinfachten Einführen des Ladungsträgers in den Container aufweisen. Dadurch wird vermieden, dass sich die Seitenwände des Ladungsträgers mit den Seitenwänden des Containers verkanten können.

In einer weiteren vorteilhaften Weiterbildung der Erfindung ist vorgesehen, dass die Gleitelemente in Form von Rollenbahnen ausgeführt sind.

Der Einsatz von Rollenbahnen hat u.a. den Vorteil, dass die Fahrzeugreifen nicht beschädigt werden können.

In einer weiteren vorteilhaften Weiterbildung der Erfindung ist vorgesehen, dass das Transportmittel ein Gabelstapler ist.

Ein Gabelstapler eignet sich besonders gut, um den Ladungsträger schnell in den Container zu positionieren.

In einer weiteren vorteilhaften Weiterbildung der Erfindung ist vorgesehen, dass das Transportmittel ein automatisiertes Flurförderfahrzeug ist.

Dadurch kann der Personalaufwand beim Beladen des Containers auf ein Minimum reduziert werden.

**In** einer weiteren vorteilhaften Weiterbildung der Erfindung ist vorgesehen, dass der Ladungsträger auf der Unterseite der Bodenplatte zwei Aufnahmen aufweist, wobei der Gabelstapler oder das Flurförderfahrzeug mit seinen Trägern die Aufnahmen zum Transport des Ladungsträgers nutzt.

Dadurch wird gewährleistet, dass der Ladungsträger beim Transport festgehalten wird und nicht umkippen kann.

**In** einer weiteren vorteilhaften Weiterbildung der Erfindung ist vorgesehen, dass auf der Unterseite des Ladungsträgers Rollen zum Verfahren des Ladungsträgers angeordnet sind.

Bei dieser Ausführung müsste der Ladungsträger vor dem Transport nicht angehoben werden.

Anhand eines Ausführungsbeispiels soll die Erfindung näher erläutert werden. Es zeigen:
Fig. 1: Den Ladungsträger in einer dreidimensionalen Ansicht von schräg oben.
Fig. 2: Das Transportmittel mit dem Ladungsträger in der Pufferposition.
Fig. 3: Das Transportmittel mit dem Ladungsträger im Container.
Fig. 4: Das Transportmittel mit dem Ladungsträger beim Zurückfahren.

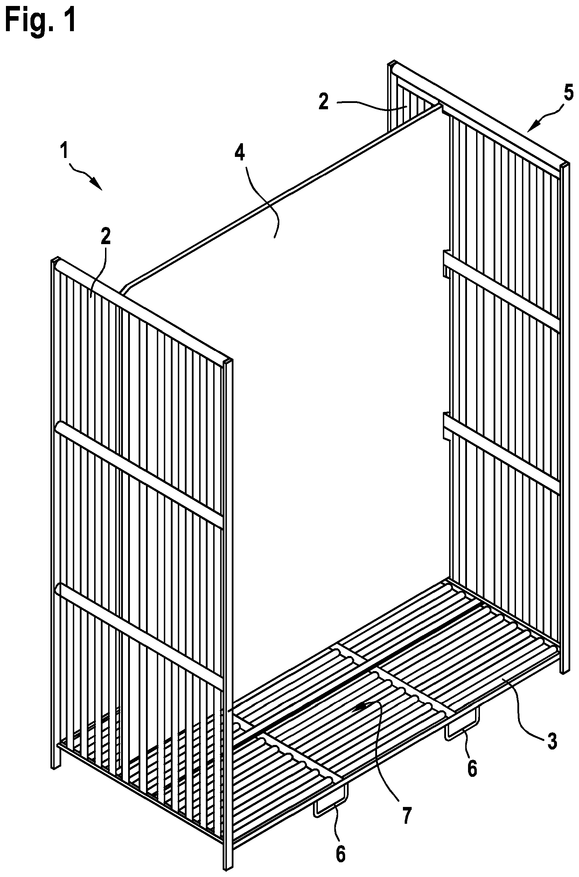

Die Fig. 1 zeigt ein den Ladungsträger 1 in einer dreidimensionalen Ansicht von schräg oben. Der Ladungsträger 1 umfasst zwei vertikal angeordnete Seitenwände 2, die an der Unterseite mit einer Grundplatte 3 fest verbunden sind.

Auf der Unterseite der Grundplatte bzw. Bodenplatte 3 sind zwei Aufnahmen 6 angeordnet.

Diese Aufnahmen 6 dienen dazu, die Träger eines Gabelstaplers aufzunehmen. Die Innenseite 7 der Bodenplatte 3 sowie die Innenseiten der Seitenwände 2 sind mit Gleitelementen, beispielsweise in Form von Rollenbahnen, verkleidet.

Diese dienen dazu, damit die gestapelten Fahrzeugreifen leicht auf den Rollenbahnen abrollen können.

Auf der Außenseite der Seitenwände 2 sind ebenfalls Gleitelemente angeordnet, die das Einführen des Ladungsträgers in den Container vereinfachen.

Die Gegenplatte 4 ist frei beweglich an den Seitenwänden 2 angeordnet. Außerdem wird die Gegenplatte 4 durch Führungsschienen an den Seitenwänden geführt. Die Führungsschienen 5 können beispielsweise an der oberen Strebe der Seitenwände 2 angeordnet sein. Außerdem können weitere Führungsschienen an den mittleren Streben der Seitenwände angeordnet sein.

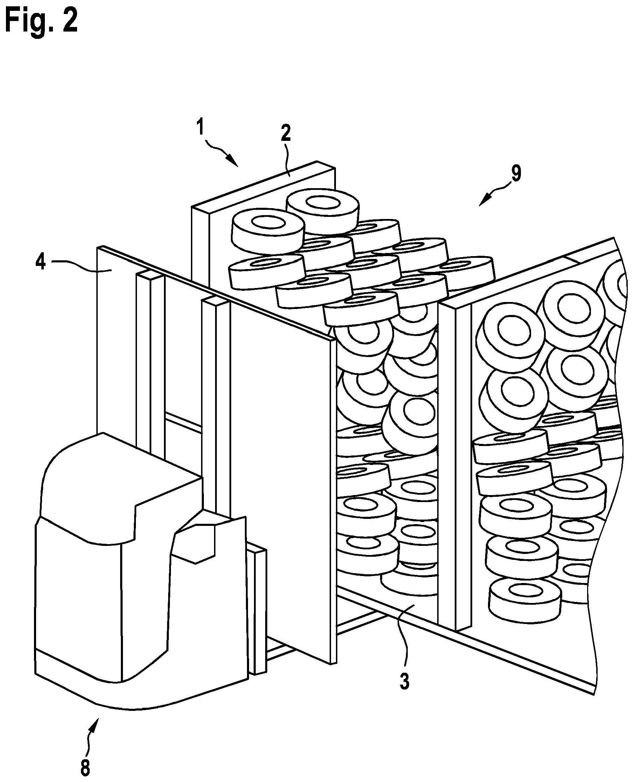

Die Figur 2 zeigt das Transportmittel 8 in Form eines Gabelstaplers, welches sich vor dem Ladungsträger 1 befindet. Der Ladungsträger 1 ist mit einer Vielzahl von gestapelten Fahrzeugreifen 9 bestückt.

Das Bestücken des Ladungsträgers 1 kann z.B. mit einem Roboter erfolgen.

Die Reifen sind so im Ladungsträger angeordnet, dass eine hohe Packungsdichte für die Fahrzeugreifen vorliegt.

Der Ladungsträger 1 befindet sich insb. in einer Pufferposition in einem Reifenwerk. Die Gegenplatte 4 ist an der Vorderseite des Gabelstaplers angeordnet und mit einem Haltemittel am Gabelstapler verbunden.

Das Transportmittel 8 holt den Ladungsträger 1 aus der Pufferposition ab und transportiert ihn zu dem Container bzw. LKW-Anhänger.

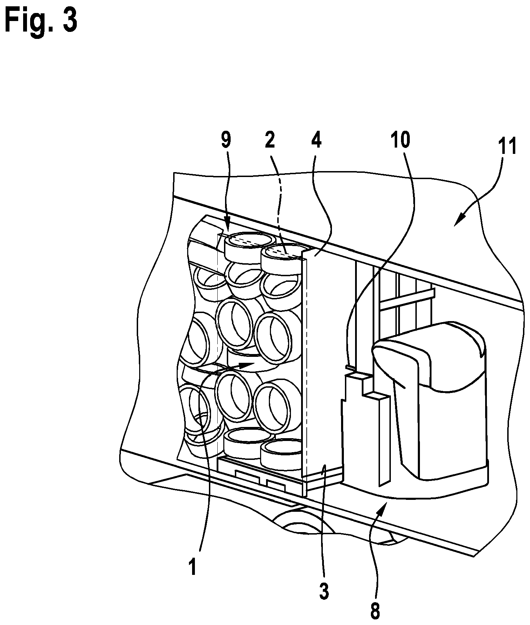

Die Figur 3 zeigt, wie der Gabelstapler mit dem Ladungsträger 1 in den Container hinein gefahren ist. Der Ladungsträger 1 wird bis zur Abladeposition verfahren und dort abgesetzt.

Der Container 11 ist ein Container für einen Nutzfahrzeuganhänger.

Die Figur zeigt den Verfahrensschritt wie die gestapelten Fahrzeugreifen 9 vom Ladungsträger 1 abgeladen werden.

Bei diesem Vorgang bewegt sich der Gabelstapler mit der Bodenplatte 3 und den Seitenwänden 2 rückwärts aus dem Container heraus.

Gleichzeitig wird bei diesem Vorgang die Gegenplatte 4 mit einem am Gabelstapler 8 angeordneten Haltemittel 10 in seiner Position fixiert. Bei diesem Vorgang drückt das verfahrbare Haltemittel 10 gegen die Gegenplatte 4, wobei gleichzeitig der Stapel mit den Fahrzeugreifen 9 von der Grundplatte 3 herunter geschoben werden. Die Gegenplatte 4 bewegt sich entlang von Führungsschienen, die an den Seitenwänden 2 angeordnet sind.

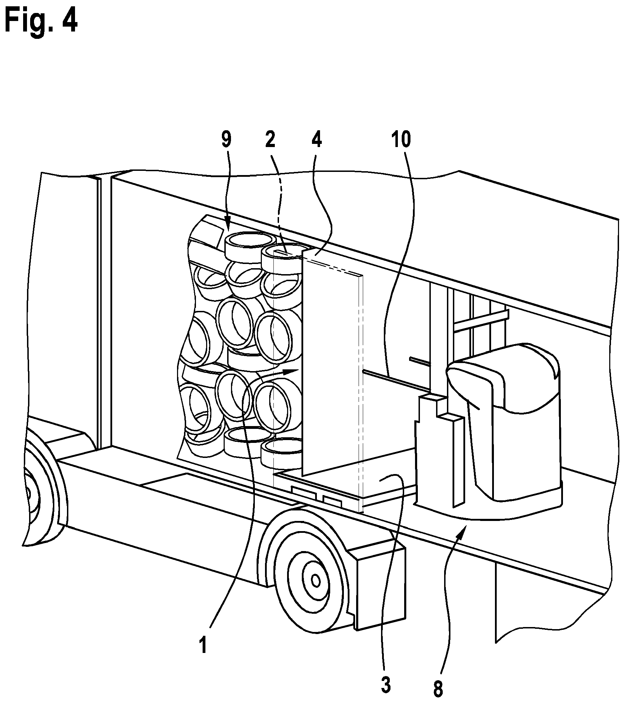

Die Fig. 4 zeigt den Vorgang bei dem die gestapelten Fahrzeugreifen in ihrer Beladeposition abgeladen worden sind. Anschließend fährt der Gabelstapler 8 mit dem Ladungsträger aus dem Container rückwärts heraus.

### Bezugszeichenliste

- 1: Ladungsträger
- 2: Seitenwände
- 3: Bodenplatte
- 4: Gegenplatte
- 5: Seitliche Führung für die Gegenplatte an der Seitenwand
- 6: Aufnahmen für Transportmittel
- 7: Innenseite der Bodenplatte
- 8: Transportmittel
- 9: Gestapelte Fahrzeugreifen
- 10: Ausfahrbares Haltemittel am Transportmittel
- 11: Container vom NFZ-Anhänger

## Patentansprüche

1. Verfahren zur Beladung eines Containers (11) mit Fahrzeugreifen (9),
mit mindestens den folgenden Schritten,
a) Bereitstellen eines Ladungsträgers (1) mit einer Vielzahl von gestapelten Fahrzeugreifen (9) an einer Pufferposition,
b) Abholen des Ladungsträgers (1) mit einem Transportmittel (8) von der Pufferposition,
c) Einbringen des Ladungsträgers (1) mit dem Transportmittel (8) in den Container (11),
d) Anordnen und Absetzen des Ladungsträgers (1) mit dem Transportmittel (8) an einer Abladeposition im Container (11),
e) Absetzen der Fahrzeugreifen (9) an der Abladeposition im Container (11),
wobei der Ladungsträger (1) mit dem Transportmittel (8) im Container zurück verfahren wird und mit einer verfahrbaren Gegenplatte (4) die Fahrzeugreifen (9) von einer Bodenplatte (3) des Ladungsträgers in die Abladeposition im Container (11) geschoben werden,
f) Herausfahren des Ladungsträgers (1) aus dem Container (11),
**dadurch gekennzeichnet, dass**
beim Absetzen der Fahrzeugreifen (9) von dem Landungsträger (1) die Gegenplatte (4) mit einem ausfahrbaren Haltemittel (10) am Transportmittel (8) in seiner Position gehalten wird,
wobei gleichzeitig das Transportmittel (1) mit der Bodenplatte (3) und den Seitenwänden (2) zurück bewegt wird.

2. Verfahren nach Anspruch 1,
**dadurch gekennzeichnet, dass**
die Gegenplatte (4) mit einer seitlichen Führung (5) an den Seitenwänden (2) des Ladungsträgers (1) angeordnet ist.

3. Verfahren nach Anspruch 1,
**dadurch gekennzeichnet, dass**
die Bodenplatte (3) auf der Innenseite und/oder die Innenseiten der Seitenwände (2) des Ladungsträgers (10) Gleitelemente aufweisen, wobei mit den Gleitelementen das Absetzen der Fahrzeugreifen (9) vom Ladungsträger (1) unterstützt wird.

4. Verfahren nach einem der vorhergehenden Ansprüche,
**dadurch gekennzeichnet, dass**
die Außenseiten der Seitenwände (2) des Ladungsträgers (1) Gleitelemente zum vereinfachten Einführen des Ladungsträgers (1) in den Container (11) aufweisen.

5. Verfahren nach einem der Ansprüche 3 oder 4,
**dadurch gekennzeichnet, dass**
die Gleitelemente in Form von Rollenbahnen ausgeführt sind.

6. Verfahren nach einem der vorhergehenden Ansprüche,
**dadurch gekennzeichnet, dass**
das Transportmittel (8) ein Gabelstabler ist.

7. Verfahren nach einem der vorhergehenden Ansprüche,
**dadurch gekennzeichnet, dass**
das Transportmittel (8) ein automatisiertes Flurförderfahrzeug ist.

8. Verfahren nach einem der Ansprüche 6 oder 7,
**dadurch gekennzeichnet, dass**
der Ladungsträger (1) auf der Unterseite der Bodenplatte (3) zwei Aufnahmen (6) aufweist,
wobei der Gabelstabler oder das Flurförderfahrzeug mit seinen Trägern die Aufnahmen (6) zum Transport des Ladungsträgers (1) nutzt.

9. Verfahren nach einem der vorhergehenden Ansprüche,
**dadurch gekennzeichnet, dass**
auf der Unterseite des Ladungsträgers (1) Rollen zum Verfahren des Ladungsträgers (1) angeordnet sind.

## Claims

1. Method for loading a container (11) with vehicle tyres (9), comprising at least the following steps,
a) providing a load carrier (1) having a multiplicity of stacked vehicle tyres (9) at a buffer position,
b) retrieving the load carrier (1) from the buffer position with a transporting means (8),
c) introducing the load carrier (1) into the container (11) with the transporting means (8),
d) arranging and setting down the load carrier (1) at an unloading position in the container (11) with the transporting means (8),
e) setting down the vehicle tyres (9) at the unloading position in the container (11), the load carrier (1) being moved back in the container with the transporting means (8) and the vehicle tyres (9) being pushed from a base plate (3) of the load carrier into the unloading position in the container (11) with a movable counter plate (4),
f) moving the load carrier (1) out of the container (11),
**characterized in that**
when the vehicle tyres (9) are being set down from the load carrier (1), the counter plate (4) is kept in its position on the transporting means (8) by means of an extendable holding means (10),
while at the same time the transporting means (1) with the base plate (3) and the side walls (2) is moved back.

2. Method according to Claim 1,
**characterized in that**
the counter plate (4) is arranged on the side walls (2) of the load carrier (1) with a lateral guide (5).

3. Method according to Claim 1,
**characterized in that**
the base plate (3) has sliding elements on the inner side and/or the inner sides of the side walls (2) of the load carrier (10), the sliding elements assisting the setting down of the vehicle tyres (9) from the load carrier (1).

4. Method according to one of the preceding claims,
**characterized in that**
the outer sides of the side walls (2) of the load carrier (1) have sliding elements to facilitate introduction of the load carrier (1) into the container (11).

5. Method according to either of Claims 3 and 4,
**characterized in that**
the sliding elements are designed in the form of roller tracks.

6. Method according to one of the preceding claims,
**characterized in that**
the transporting means (8) is a forklift truck.

7. Method according to one of the preceding claims,
**characterized in that**
the transporting means (8) is an automated guided vehicle.

8. Method according to either of Claims 6 and 7,
**characterized in that**
the load carrier (1) has two receptacles (6) on the underside of the base plate (3), the forklift truck or the guided vehicle using the receptacles (6) for transporting the load carrier (1) with its forks.

9. Method according to one of the preceding claims,
**characterized in that**
arranged on the underside of the load carrier (1) are rollers for moving the load carrier (1).

## Revendications

1. Procédé de chargement d'un contenant (11) avec des pneus de véhicule (9), comportant au moins les étapes suivantes,
(a) fourniture d'un support de chargement (1) comportant une pluralité de pneus de véhicule empilés (9) à une position tampon ;
(b) enlèvement du support de chargement (1) de la position tampon à l'aide d'un moyen de transport (8),
(c) introduction du support de chargement (1) dans le contenant (11) à l'aide du moyen de transport (8),
(d) agencement et placement du support de chargement (1) dans une position de déchargement dans le contenant (11) à l'aide du moyen de transport (8),
(e) placement des pneus de véhicule (9) dans la position de déchargement dans le contenant (11),
dans lequel le support de chargement (1) est ramené dans le contenant à l'aide des moyens de transport (8) et les pneus de véhicule (9) sont poussés depuis une plaque de base (3) du support de chargement dans la position de déchargement dans le contenant (11) à l'aide d'une contre-plaque mobile (4),
(f) déplacement du support de chargement (1) hors du contenant (11), **caractérisé en ce que**
lors du placement des pneus de véhicule (9) à partir du support de chargement (1), la contre-plaque (4) est maintenue dans sa position à l'aide d'un moyen de maintien extensible (10) sur le moyen de transport (8),
dans lequel, en même temps, le moyen de transport (1) est déplacé vers l'arrière avec la plaque de base (3) et les parois latérales (2).

2. Procédé selon la revendication 1,
**caractérisé en ce que**
la contre-plaque (4) est agencée à l'aide d'un guide latéral (5) au niveau des parois latérales (2) du support de chargement (1).

3. Procédé selon la revendication 1,
**caractérisé en ce que**
la plaque de base (3) présente, sur le côté intérieur et/ou les côtés intérieurs des parois latérales (2) du support de chargement (10), des éléments de glissement, dans lequel les éléments de glissement facilitent le placement des pneus de véhicule (9) à partir du support de chargement (1).

4. Procédé selon l'une des revendications précédentes,
**caractérisé en ce que**
les côtés extérieurs des parois latérales (2) du support de chargement (1) présentent des éléments de glissement pour faciliter l'introduction du support de chargement (1) dans le contenant (11).

5. Procédé selon l'une des revendications 3 ou 4,
**caractérisé en ce que**
les éléments de glissement sont conçus sous la forme de convoyeurs à rouleaux.

6. Procédé selon l'une des revendications précédentes,
**caractérisé en ce que**
le moyen de transport (8) est un chariot élévateur à fourche.

7. Procédé selon l'une des revendications précédentes,
**caractérisé en ce que**
le moyen de transport (8) est un chariot de manutention automatisé.

8. Procédé selon l'une des revendications 6 ou 7,
**caractérisé en ce que**
le support de chargement (1) présente deux logements (6) sur le côté inférieur de la plaque de base (3),
dans lequel le chariot élévateur à fourche ou le chariot de manutention avec ses supports utilise les logements (6) pour le transport du support de chargement (1).

9. Procédé selon l'une des revendications précédentes,
**caractérisé en ce que**
des rouleaux sont agencés sur le côté inférieur du support de chargement (1) pour le déplacement du support de chargement (1).
